# EUROPEAN PATENT APPLICATION

(11) **EP 4 597 390 A1**
(43) Date of publication of application: **06.08.2025**
(21) Application number: 24155550.7
(22) Date of filing: 02.02.2024
(51) Int. Cl.: G06Q 10/10, G06Q 50/02

(54) **COMPUTER-IMPLEMENTED METHOD FOR ASSIGNING A UNIQUE IDENTIFIER TO A LAND PARCEL**

(71) Applicant: Varda AG, 4051 Basel (CH)
(72) Inventor: Jenkinson, Andrew, 4051 Basel (CH)
(74) Representative: AWA Sweden AB

(57) **Abstract**

Computer-implemented method for assigning a unique identifier to a land parcel, the computer-implemented method comprising, by a remote server, receiving a request from a local computing device to generate a unique identifier for the land parcel, generating a unique number, replacing the digits of the unique number by characters chosen from a character set, thereby generating the unique identifier, and assigning the unique identifier to the land parcel.

## Description

### TECHNICAL FIELD

The present disclosure concerns the field of digital agriculture. Specifically, the present disclosure concerns a computer-implemented method for assigning a unique identifier to a land parcel, a corresponding computer program, and a storage medium comprising the computer program.

### BACKGROUND

In order to increase agricultural yields and to generally improve agricultural processes and efficiencies, digitalization plays an ever increasing role. Digitalization may, for instance, allow for an improved alignment of demand and supply regarding fertilization, seeding, irrigation, harvesting, ploughing, or other agricultural operations, for a given land parcel. In this respect, an important aspect is to provide a parcel identifier allowing correct identification of the specific parcel where an agricultural operation is to be performed. By identifying the parcel correctly, an efficient communication of parcel information may be ensured, avoiding cumbersome descriptions of geographical location. Furthermore, use of an identifier allows digitized agricultural information concerning, for instance, soil conditions, crop types, and irrigation levels, to be associated with the correct land parcel. Thereby an efficient use of resources may be achieved.

A parcel identifier is preferably generated by a server, such that it can easily be integrated in a digital workflow. The server may form a part of distributed computing environment, which can generate multiple identifiers in a short time span. Given the large amount of land parcels existing on a worldwide basis and the corresponding need to avoid duplication, an identifier generated for given land parcel should be unique. Furthermore, the unique identifier should preferably be easily recognizable as being an identifier by a human operator, so as to minimize the chance for human errors during transfer of the unique identifier, for instance when inputting to a computing device, or when communicating by telephone. Preferably, it should not be apparent from the unique identifier itself which particular land parcel the unique identifier is associated with, thereby avoiding sensitive information from easily being spotted by third parties.

### SUMMARY

According to a first aspect, the present disclosure concerns a computer-implemented method for assigning a unique identifier to a land parcel, the method comprising, by a remote server, receiving a request from a local computing device to generate a unique identifier for the land parcel, generating a unique number, replacing the digits of the unique number by characters chosen from a character set, thereby generating the unique identifier, and assigning the unique identifier to the land parcel.

According to a second aspect of the present disclosure, the unique number comprises a time-stamp, a sequential number, and an ID of the remote server.

According to a third aspect of the present disclosure, the unique identifier comprises 4 - 14 characters, preferably 5-12 characters, more preferably 6 - 10 characters, most preferably 6 - 8 characters.

According to a fourth aspect of the present disclosure, the characters of the character set comprises numbers, letters and optionally, special symbols.

According to a fifth aspect of the present disclosure, the letters comprise consonants.

According to a sixth aspect of the present disclosure, the letters are capital letters.

According to a seventh aspect of the present disclosure, the character set includes 31 or 34 characters.

According to an eight aspect of the present disclosure, replacing (S30) the digits of the unique number includes, for a character set with N characters, providing a look-up table comprising a row with the characters and a row with column-indices ranging from 0 to N - 1, dividing the unique number repeatedly by N to obtain a quotient and a remainder for each division; and proceeding from the last-obtained remainder to the first-obtained remainder to identify the column-index with the same value as the remainder; and to replace the remainder with the character in the same column as the identified column-index, wherein the resulting string of characters forms the unique identifier.

According to an ninth aspect of the present disclosure, the method further comprises inputting the unique identifier into a check digit algorithm to produce a checksum character; and including the checksum character in the unique identifier.

According to a tenth aspect of the present disclosure, the checksum character is included at the last position of the unique identifier.

According to an eleventh aspect of the present disclosure, receiving the request further comprises transmitting the request from the local computing device to the remote server on the basis of an Application Programming Interface

According to a further aspect, the present disclosure also concerns a computer program product comprising instructions which, when the program is executed by a remote server and a local computing device, cause the remote server and local computing device to carry out method of the present disclosure.

According to yet a further aspect, the present disclosure concerns a computer-readable storage medium comprising instructions which, when executed by a computer, cause the computer to carry out method of the present disclosure.

### BRIEF DESCRIPTION OF DRAWINGS

The accompanying drawings, which are included to provide a further understanding of the present disclosure and are incorporated in and constitute a part of this specification, illustrate embodiments of the disclosure and together with the description serve to explain the principles of the disclosure.
Figure 1 schematically illustrates the method according to the main embodiment of the present disclosure.
Figure 2 shows a flowchart of a method of the current disclosure according to the main embodiment of the present disclosure.
Figure 3 shows a flowchart of a method of the current disclosure according to a further embodiment of the present disclosure.

### DETAILED DESCRIPTION

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of". The recitation of numerical ranges by endpoints includes all numbers and fractions subsumed within the respective ranges, as well as the recited endpoints.

Unless otherwise defined, all terms used in disclosing the application, including technical and scientific terms, have the meaning as commonly understood by one of ordinary skill in the art to which this application belongs. By means of further guidance, term definitions are included to better appreciate the teaching of the present application.

In the following passages, different aspects of the disclosure are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present application. Thus, appearances of the phrases "in one embodiment" or "in an embodiment" in various places throughout this specification are not necessarily all referring to the same embodiment, but may.

Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the application, and form different embodiments, as would be understood by those in the art. For example, in the appended claims, any of the claimed embodiments can be used in any combination.

In the present disclosure, reference is made to the accompanying drawings that form a part hereof, and in which are shown by way of illustration only of specific embodiments in which the application may be practiced. Parenthesized or emboldened reference numerals affixed to respective elements merely exemplify the elements by way of example, with which it is not intended to limit the respective elements. It is to be understood that other embodiments may be utilized and structural or logical changes may be made without departing from the scope of the present application. The following detailed description, therefore, is not to be taken in a limiting sense, and the scope of the present application is defined by the appended claims.

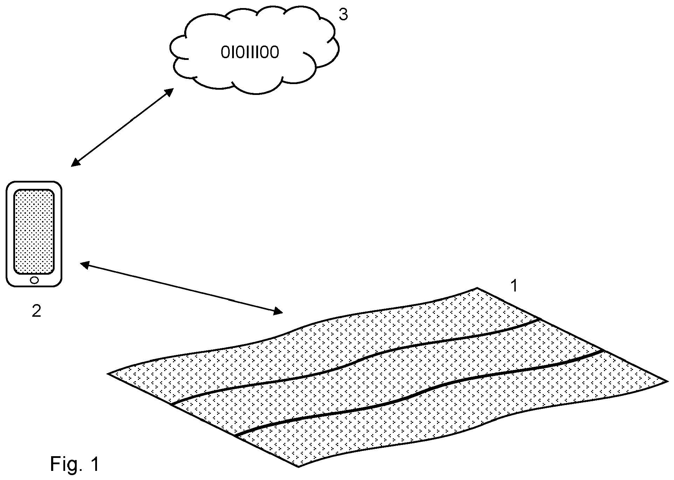

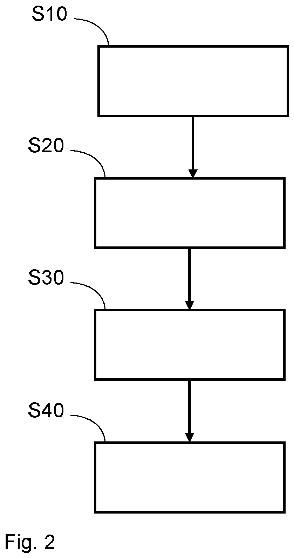

With reference to fig. 1 and 2, according to the method of the present disclosure a unique identifier is assigned to a land parcel 1. The land parcel 1 may comprise any type of agricultural land parcel, such as a field, farmland, an acreage, a cropland, a plantation, or a meadow. Alternatively, the land parcel may comprise a forestry parcel. Importantly, the unique identifier may identify the land parcel 1 in ongoing and future agricultural or forestry operations, such as surveying, fertilizing, seeding, irrigating, ploughing, harvesting, logging, cutting, weeding, pest controlling, grazing, or the like. In each case, the unique identifier may be used in communications between goods suppliers, operators, analysts, authorities, users and / or other parties that are involved with the operation of the land parcel 1.

According to the method of the present disclosure, a request S10 from a local computing device 2 to generate a unique identifier for the land parcel 1 is received by a remote server 3. The remote server 3 preferably includes one or more remote servers 3. The remote server may, for instance, be a cloud server, a virtual server, or a physical server. The remote server includes at least a CPU, an I/O module, a memory, a hard disk, a RAID controller, and a power supply. Receiving S10 the request may comprise transmitting the request from the local computing device 2 to the remote server 3 on the basis of an Application Programming Interface.

The local computing device 2 preferably includes one or more local computing devices. The local computing device may, for instance, be a smartphone, a tablet computer, a smart watch, a laptop, a desktop PC, a workstation, and / or a control terminal. The local computing device preferably includes at least an I/O module, a CPU, a GPU, a memory, and a power supply. The I/O module may include a screen, such as a touch screen, and / or a keyboard. The I/O module may further include a wired or wireless communications module.

Each remote server may communicate with one or more local computing devices simultaneously. Each local computing device may preferably communicate with one remote server at any given time. Together, the local computing device and the remote server form a distributed computing environment. Communication may preferably be wireless. Wireless communication may include communication via a cellular network, such as 3G network, a 4G network, or a 5G network, a Wi-Fi network, a Zigbee network or the like. Alternatively, communication may be via a wired connection, or partially wired connection.

The request S10 for a unique identifier from the local computing device 2 may, for instance, originate from a user input to the local computing device 2. Thereto, the local computing device 2 may include a user interface, such as graphical user interface (GUI), for receiving user input. The GUI may form part of an app or a program, installed and run on the local computing device. Alternatively, the GUI may form part of a web-based environment. In response to the user input, the local computing device 2 may send a request for a unique identifier to the remote server 3. The request may be sent via the aforementioned wireless, or wired, communication.

According to the method of the present disclosure, the remote server 3 generates S20 a unique number in response to the request from the local computing device 2. The unique number is a positive integer. The unique number preferably includes a timestamp, a sequence number, and a server ID. The unique number may be stored as a decimal or a binary. The unique number may include up to 64 bits, preferably up to 48 bits, most preferably up to 35 bits. Preferably, the first 30 bits of the unique number are allocated to the time stamp. The 3 bits following the first 30 bits are preferably allocated to the sequential number. Finally, the last 2 bits are preferably allocated to the server ID.

The timestamp, sequence number and server ID are preferably appended to one another by bit-shift operations. If, e.g, the time stamp is retrieved first, extra zeros are created, which are subsequently overridden by the bits allocated to the sequence number and the bits allocated to the server ID.

Preferably, generation S20 of the unique number is performed in a blocking manner. Thereby, only one unique number can be generated by each server at the same instance of time. Advantageously, generation of multiple unique numbers with the exact same time stamp, sequence number and server ID is thereby avoided, so as to preserve unicity for each unique number being generated.

The timestamp includes the number of seconds that have expired since a reference date and time. The reference date and time may, for instance, be chosen as any date and time up to, and possibly including, the date and time when the method becomes operational. Preferably, the reference date and time are chosen just before, or at, midnight of the day where the method becomes operational.

The sequence number preferably includes a number from 0 to 7. Consequently, a maximum of eight sequence numbers can be generated per second, per remote server. Correspondingly, a maximum of eight unique identifier's can thereby be generated per second, by each remote server. If more than eight requests are received by any one remote server within the same second, each request above the eight request is set on hold. Advantageously, collisions are thereby avoided and each unique identifier remains unique.

The server ID preferably includes a number from 0 to 3. Consequently, a maximum of four remote servers can generate unique numbers simultaneously. The server ID may, for instance, include the last digit of the server hostname. The server ID is preferably identified at runtime. With four remote servers and a maximum of eight sequence numbers per server per second, a total of 32 unique numbers may be generated per second. Consequently, at most 32 unique identifiers may be generated per second. Any additional requests in the same second will be put on hold to the next second.- Advantageously, the described combination of servers and sequence numbers achieves the maximum estimated generation rate while maintaining the smallest possible unique identifier.

Advantageously, according to the present method time is used to guarantee uniqueness of the unique identifier, instead of a database counter. Thereby, dependency on a remote database is avoided and any issues related to remote server failure or database failure may not prevent the generation of further unique identifiers. Further advantageously, unique identifier generation can be performed in a shared-nothing distributed architecture, allowing the system to operate even if a local computing device and / or a remote server fails. Advantageously, a generated unique identifier can therefore not easily be coupled to the correct land parcel by an unauthorized third party. Thereby, chances of economically sensitive information on the land parcel being accessed by unauthorized parties can be significantly reduced. Further advantageously, unique identifiers generated by the inventive method are sortable by time.

According to the method of the present disclosure, the digits of the unique number are replaced S30 by characters, thereby generating the unique identifier. The characters are chosen from a character set. The character set may preferably be an alphanumeric character set, comprising ASCII characters. The characters of the character set may include letters and numbers. Optionally, the characters of the character set may include special symbols, such as '#', '%', or '*'. Notably, there are 33 special symbols available in the ASCII character set. According to one preferred embodiment, the character set includes 31 characters. The 31 characters may include 10 numbers and 21 letters. The numbers may preferably range from 0 to 9. By using single-digit numbers, the length of the unique identifier is kept as short as possible, thereby increasing legibility for human operators and decreasing the chance for (human) transcription errors. The letters may include the 21 consonants of the English alphabet. The letter Y is considered to be a consonant. Advantageously, by using only consonants the accidental forming of undesirable words, such as names and profanities, may be avoided in the unique identifier. The letters may preferably be capital letters. The legibility of the unique identifier may be improved by using capital letters. Alternatively, the letters may include a mix of capital letters and lowercase letters. Advantageously, the number of characters in the character set may thereby be increased beyond 31, such that the length of the unique identifier can be shortened. The order of the characters in the character set is preferably fixed, with numbers preceding letters. As an example, the character set with 31 characters could have the form:
{0,1,2,3,4,5,6,7,8,9,B,C,D,F,G,H,J,K,L,M,N,P,Q,R,S,T,V,W,X,Y,Z}. Alternatively, the character set may include 34 characters. The character set may then include three vowels, in addition to the numbers 0 - 9 and the 21 consonants. The vowels may, for instance, be A, E, and U. Further alternatively, the character set may include more than three vowels and, optionally, special symbols. The characters in the character set may be ordered, with numbers preceding consonants, consonants preceding vowels and vowels preceding optional special symbols. Preferably, the letters are capital letters. Optionally, the letters are a mix of capital letters and lowercase letters.

The characters of the character set are placed in a look-up table. Denoting the total number of characters in the character set by *N*, the look-up table has two rows and *N* columns. The character set includes more than one character, such that *N* is a positive integer. The first row in the look-up table includes integer column-indices, ranging from 0 to *N*-1. The second row in the look-up table includes the characters of the character set. Each column in the look-up table thus includes a column-index and a character. Preferably, the first positions of the second row of the look-up table include the numbers of the character set, and the following positions of the second row of the look-up table include the letters of the character set. An illustrative look-up table for an exemplary character set with 20 characters, *N*=20, may be as follows:

| | | | | | | | | | | | | | | | | | | | |
|---|---|---|---|---|---|---|---|---|---|---|---|---|---|---|---|---|---|---|---|
| 0 | 1 | 2 | 3 | 4 | 5 | 6 | 7 | 8 | 9 | 10 | 11 | 12 | 13 | 14 | 15 | 16 | 17 | 18 | 19 |
| 0 | 1 | 2 | 3 | 4 | 5 | 6 | 7 | 8 | 9 | B | C | D | F | G | H | J | K | L | M |

In order to replace, S30, the digits of the unique number by characters, the unique number is divided repeatedly by *N.* Each division is an integer division, resulting in a quotient and a remainder. Each quotient Qᵢ is the greatest whole number of times that *N* may be subtracted from the previous quotient Qᵢ₋₁, before the remainder Rᵢ becomes negative. The positive integer index i denotes the i*^{th}* division. For the first division, i=1, the unique number itself is set as the previous quotient Q₀. Each remainder Rᵢ is a whole number, with a value ranging from 0 to *N*-1. Dividing is continued until the quotient equals zero, Qᵢ=0. The remainders Rᵢ are stored.

Next, the remainders Rᵢ are ordered in reverse order, from the last-obtained remainder to the first-obtained remainder. Thereby, a string of remainders is formed. For example, for a total number of *I* divisions, the remainders are ordered as R*_{I}*, R_{*I*-1}, ... R₁. The value of each remainder is equal to the value of one column-index in the look-up table. Proceeding, therefore, from the last-obtained remainder to the first-obtained remainder, for each remainder the column-index with the same value as the remainder is identified. The remainder is then replaced by the character located in the same column of the look-up table as the identified column-index. The resulting string of characters forms the unique identifier. The unique identifier is stored.

The unique identifier preferably has a fixed-length. A fixed-length refers to a fixed number of characters. The unique identifier may, for instance, include 4 - 14 characters, preferably 5 - 12 characters, most preferably 6-10 characters. Advantageously, by utilizing a limited number of characters, human transcription errors, during oral or written communication can preferably be avoided, such that the correct unique identifier is communicated for a given land parcel. Furthermore, the resulting unique identifier is more suitable for writing on, e.g., soil sample bags, tags, or other objects used in or off the field, with less chances for writing errors.

Furthermore, the number of characters required for the time stamp changes with the amount of time that the method has been in operation. For the first about 10 months of operation, which includes up to about 27734490 seconds, the time stamp includes 6 characters. For the period from about 10 months to about 27 years of operation, which includes up to about 859769190 seconds, the time stamp includes 7 characters. For the period from about 27 years to about 845 years of operation, which includes up to about 26652844920 seconds, the time stamp includes 8 characters. Therefore, the length of the unique identifier may increase with passing time.

The steps for generating a unique identifier by the server may be as follows:
- receive request to generate unique identifier;
- define the 2-bit server ID at runtime;
- record the time elapsed from the reference date and time to current time, up to milliseconds;
- round off the recorded elapsed time to seconds, interval_s, as an unsigned integer;
- while interval_s < previous_interval_s, sleep, to catch system clock adjustments;
- if interval_s > previous_interval_s, set sequential number to 0 and previous_interval_s to interval_s;
- while sequential number > 7, sleep;
- assemble unique number from time stamp, sequential number and server ID;
- increment sequential number by 1;
- replace digits of unique number with characters from look-up table to generate unique identifier;
- assign unique identifier to land parcel entries in database;
- communicate unique identifier to local computing device.

The unique identifier is generally serialized as a string of characters. Additionally, the unique identifier may be transmitted as a serialized string of characters. Optionally, the unique identifier may be stored serialized as a binary. Advantageously, a more efficient storage and greater database performance may thereby be achieved. The unique identifier comprises 4 - 14 characters, preferably 5-12 characters, more preferably 6 - 10 characters, most preferably 6 - 8 characters. The unique identifier preferably includes capital letters and numbers. In general, data software, such as spreadsheets, may automatically convert strings of numbers into dates, thereby causing errors. Advantageously, with a unique identifier including a combination of characters and numbers, such software-based errors may be avoided. Furthermore, by including a combination of characters and numbers, a unique identifier is easily recognizable by a human operator as being a unique identifier for a land parcel, and not as just some other number.

According to the method of the present disclosure, the unique identifier is assigned S40 to the land parcel 1. Thereto, the at least one server 3 preferably includes a database. The database may include at least three entries for each land parcel. A first entry may represent a digital parcel object, representing the land parcel. A second entry may represent a parcel boundary object, including a list of geospatial coordinate pairs defining the boundary of the land parcel. Preferably, each coordinate pair includes a longitude and a latitude. A third entry may represent a parcel-boundary relation object. The parcel-boundary relation object preferably includes dates, such as dates at which date the parcel was defined by a particular boundary. Advantageously, changes of parcels boundaries may thereby be monitored in time. Such changes may arise due to, for instance, merging or splitting of parcels, or due to boundary corrections.

The unique identifier is preferably coupled to the entries for the land parcel and stored in the database. The unique identifier is furthermore communicated by the remote server to the local computing device. A user may thereby receive the unique identifier for further application and or use in the field.

According to a further embodiment of the method of the present disclosure, vowels may only be included during encoding when all other characters are numbers. Consequently vowels are not included when one or more characters are consonants. In this case, a character set with at least 34 characters is preferably utilized. The last three positions in the look-up table may then include vowels, such as 'A', 'E', and 'U'. Advantageously, it is thereby avoided that names, profanities, or otherwise inappropriate words are formed as the unique identifier, or as a part of the unique identifier. Further advantageously, by omitting vowels when consonants are present, the unique identifier does not have to be checked against dictionaries in all available languages in order to avoid inappropriate words.

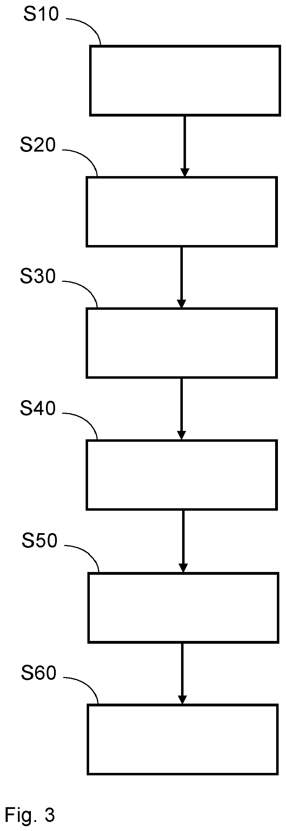

According to a further embodiment of the method of the present disclosure, with refence to fig. 3, the unique identifier may be input S50 into a check digit algorithm. The check digit algorithm is preferably run on the local computing device 2. The check digit algorithm may, for instance, include Damm's algorithm. The check digit algorithm is applied to the characters of the unique identifier. The check digit algorithm results in a checksum, such as a checksum character. The checksum character may be included S60 in the unique identifier. Thereby the length of the unique identifier may be increased by one character. The checksum character may, for instance, be tacked onto the end, generally understood to be the right-hand side, of the unique identifier by the check digit algorithm. The last character of the unique identifier, representing the checksum, is thus generated by the check digit algorithm, based on the preceding characters of the unique identifier. Consequently, when a transcription error occurs, the checksum character will no longer match the preceding characters of the unique identifier, and the unique identifier will be found to be invalid. Advantageously, this may prevent issues arising from transcription errors, which are generally impossible to spot without performing a check digit algorithm, unless a user works out the error manually.

Characters appearing at different positions in the unique identifier may be weighed differently in the check digit algorithm. Human transcription errors are. For instance, more likely for the middle characters of a unique identifier. Thereto, a lower weighing may be applied to the first characters and / or the last characters of the unique identifier, as compared to the middle characters of the unique identifier. Advantageously, the probability of the checksum being correct is thereby maximized.

According to yet a further embodiment of the method of the present disclosure, only the 16^{th} unique identifier generated in the same second can have a zero at its first position(s). Generally, it is assumed that there is a low likelihood that sixteen or more unique identifier's are generated in the same second in time. Therefore, the generation of an unique identifier with one or more zero(s) at its first position(s) is unlikely in practice. Alternatively, the zero in the character set may be replaced by a capital 'O' instead. Advantageously, erroneous deleting of one or more leading zeroes of a unique identifier may thereby be prevented. Such deletion could easily arise due to a human operator perceiving the one or more leading zeroes of a unique identifier as being irrelevant information and thereby deleting or omitting these leading zero(s) when communicating, transferring, or recording the unique identifier.

The present disclosure further includes a computer program product. The computer program product comprises machine readable instructions which, when the computer program product is executed by a remote server and a local computing device, cause the remote server and the local computing device to carry out the method of the present disclosure.

The present disclosure further includes a computer-readable storage medium. The computer readable storage medium comprises instructions which, when executed by a remote server and a local computing device, cause the remote server and the local computing device to carry out the method of the invention. The computer readable storage medium may include a cloud-based storage, a hard disk, an internal memory of a computing device, a solid state drive, a flash drive, a memory stick, a portable drive, a CD-ROM, or any other suitable medium.

The person skilled in the art may realize that the present disclosure by no means is limited to the embodiments described herein. On the contrary, many modifications and variations are possible, all falling within the scope of the appended claims.

## Claims

1. A computer-implemented method for assigning a unique identifier to a land parcel (1), the computer-implemented method comprising, by a remote server (3):
- receiving (S10) a request from a local computing device (2) to generate a unique identifier for the land parcel (1);
- generating (S20) a unique number;
- replacing (S30) the digits of the unique number by characters chosen from a character set, thereby generating the unique identifier; and
- assigning (S40) the unique identifier to the land parcel (1).

2. The method of claim 1, wherein the unique number comprises a time-stamp, a sequential number, and an ID of the remote server (3).

3. The method of claim 1, wherein the unique identifier comprises 4 - 14 characters, preferably 5-12 characters, more preferably 6 - 10 characters, most preferably 6 - 8 characters.

4. The method of claim 1, wherein the character set comprises numbers, letters and optionally, special symbols.

5. The method of claim 4, wherein the letters comprise consonants.

6. The method of any of claim 5, wherein the letters are capital letters.

7. The method of any of claims 1-6, wherein the character set includes 31 or 34 characters.

8. The method of any of claims 1-7, wherein replacing (S30) the digits of the unique number includes, for a character set with N characters:
- providing a look-up table comprising a row with the characters and a row with column-indices ranging from 0 to N - 1;
- dividing the unique number repeatedly by N to obtain a quotient and a remainder for each division; and
- proceeding from the last-obtained remainder to the first-obtained remainder to:
• identify the column-index with the same value as the remainder; and
• replace the remainder with the character in the same column as the identified column-index;
wherein the resulting string of characters forms the unique identifier.

9. The method of any of claims 1-8, further comprising:
- inputting (S50) the unique identifier into a check digit algorithm to produce a checksum character; and
- including (S60) the checksum character in the unique identifier.

10. The method of claim 9, wherein the checksum character is included at the last position of the unique identifier.

11. The method of any of claims 1 - 10, wherein receiving (S10) the request further comprises transmitting the request from the local computing device (2) to the remote server (3) on the basis of an Application Programming Interface.

12. A computer program product comprising instructions which, when the program is executed by a remote server and a local computing device, cause the remote server and local computing device to carry out method of any one of claims 1 - 11.

13. A computer-readable storage medium comprising instructions which, when executed by a computer, cause the computer to carry out method of any one of claims 1 - 11.
